(19) Europäisches Patentamt
European Patent Office
Office européen des brevets

(11) **EP 0 609 172 B1**

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int Cl.[6]: **G01B 21/06**

(21) Anmeldenummer: **94810010.2**

(22) Anmeldetag: **11.01.1994**

(54) **Verfahren zur Messung der Länge von auf einen Wickel auflaufendem Wickelgut**

Method for measuring the lengths of wound material arriving on a reel

Procédé pour la mesure de largeurs de matériau enroulé sur une bobine

(84) Benannte Vertragsstaaten:
**CH DE IT LI**

(30) Priorität: **27.01.1993 CH 229/93**

(43) Veröffentlichungstag der Anmeldung:
**03.08.1994 Patentblatt 1994/31**

(73) Patentinhaber: **Benninger AG**
**CH-9240 Uzwil (CH)**

(72) Erfinder:
• **Zeller, Hans-Peter**
**CH-9230 Flawil (CH)**

• **Gemperli, Hans-Peter**
**CH-9000 St. Gallen (CH)**

(74) Vertreter: **Hepp, Dieter et al**
**Hepp, Wenger & Ryffel AG,**
**Friedtalweg 5**
**9500 Wil (CH)**

(56) Entgegenhaltungen:
EP-A- 0 017 613     DE-A- 3 215 322
US-A- 4 159 572

**Beschreibung**

Die Erfindung betrifft ein Verfahren zur Messung der Gesamtlänge von auf einen Wickel auflaufendem Wickelgut gemäss Oberbegriff von Anspruch 1.

Derartige Verfahren sind vor allem bei Zettelmaschinen und Schärmaschinen in verschiedenen Ausführungsformen bekannt und gebräuchlich. Bei dem Wickelgut handelt es sich in der Regel um bahnförmig geführte Fäden.

Wichtig dabei ist, dass die Länge des Wickelguts exakt gemessen wird. In der Praxis wird das Wickelgut über eine Messwalze zur Bestimmung der Gesamtlänge geführt. Bei Abbrems- und Beschleunigungsvorgängen des Wickels tritt zwischen der Messrolle und dem Wickelgut ein Schlupf auf, dessen Grösse nicht ohne weiteres feststellbar ist. Das führt zu Fehlern bei der Längenmessung: Beim Hochfahren dauert es eine bestimmte Zeit, bis das Wickelgut die Messwalze auf Synchrongeschwindigkeit beschleunigt und beim Abbremsen rotiert die Messwalze aufgrund ihres Rotations-Trägheitsmoments weiter. Die Betriebsphasen, in denen Schlupf an der Messrolle auftritt, werden im folgenden als Schlupfbetrieb, jene ohne Schlupf als kontinuierlicher Betrieb bezeichnet.

Es wurde bereits der Vorschlag gemacht, ganz auf die Messrolle zu verzichten. Danach sollte die Gesamtlänge aus der Drehzahl des Wickels und dem Umfang des Wickels ermittelt werden. Dies erwies sich jedoch als schwierig, da kleinste Fehler beim Ermitteln der Dicke des Wickels zu erheblichen Abweichungen des errechneten Längenwerts vom tatsächlichen Längenwert führen.

Ohne Messrolle arbeitet auch das im Dokument EP-A-0 017 613 beschriebene Verfahren. In diesem wird die Länge eines von einem ersten Wickel abgezogenen und auf einen anderen Wickel aufgewickelten Fadens so bestimmt, dass die Zahl der Wickellagen auf dem ersten Wickel, von denen Faden abgezogen wird, bestimmt wird und mit der Fadenlänge einer Wickellage multipliziert wird. Dieses Verfahren ist also nur brauchbar, wenn Faden von einem ersten Wickel mit Wickellagen konstanter und bekannter Fadenlänge abgezogen wird.

Eine andere Möglichkeit zur Ermittlung der Länge von auf einen Wickel auflaufendem Wickelgut ist im Dokument US-A-4 159 572 beschrieben. Danach wird eine das Wickelgut berührende Messrolle verwendet, um den Durchmesser des Wikkels zu bestimmen. Der Wickeldurchmesser ist gleich dem Messrollendurchmesser multipliziert mit dem Verhältnis von Messrollendrehzahl zu Wickeldrehzahl. Die Länge des im Verlauf von N Wickelumdrehungen aufgewickelten Wickelgutes ist dann gleich dem mittleren Wickeldurchmesser während dieser N Umdrehungen multipliziert mit $\pi$. N. Auch dieses Verfahren kann genaue Resultate nur so lang liefern, als zwischen dem Wickelgut und der Messrolle kein Schlupf auftritt.

In der DE-3215322 wird deshalb angegeben, im Betrieb zwischen zwei Messverfahren umzuschalten. Im kontinuierlichen Betrieb wird die Wickellänge mittels einer Messwalzen-Anordnung gemessen. Daneben ist eine zweite Messmethode vorgesehen, bei der die Wickellänge aus der Drehzahl des Wickels und dem Umfang des Wickels berechnet wird. Die Anordnung umfasst im weiteren eine Vorrichtung, welche das Auftreten von Schlupf auf der Messwalze detektieren kann. Solche Vorrichtungen sind zum Beispiel in der o.g. DE-3215322 von Schlafhorst erklärt. Diese Vorrichtung wird derart zum Umschalten zwischen den beiden Messmethoden verwendet, dass bei kontinuierlichem Wickelbetrieb die Messung mit der Messwalze durchgeführt wird und beim Auftreten von Schlupf sofort auf die alternative Messmethode umgeschaltet wird. Die Länge ergibt sich dabei aus der Anzahl Umdrehungen oder Teilumdrehungen multipliziert mit dem jeweiligen Umfang des Wickels. Diese Messmethode wird solange beibehalten, bis wieder kontinuierlicher Wickelbetrieb herrscht; dann wird wieder zur Messung mittels Messrolle zurückgekehrt.

Eine Schwierigkeit bei der bekannten Anordnung besteht darin, den Umfang des Wickels während des Schlupfbetriebs möglichst genau zu bestimmen; davon ist die Genauigkeit der angestrebten Längenmessung abhängig. Dort wurde vorgeschlagen, den Wickelumfang während des kontinuierlichen Wickelbetriebs zu messen, um ihn dann beim Auftreten von Schlupf zur Verfügung zu haben. Dazu wird von der Messwalze die Länge des während einer Umdrehung des Wickels aufgerollten Wickelguts gemessen. Diese Messung wird bei jeder Umdrehung des Wickels durchgeführt und der ermittelte Messwert in einem Zwischenspeicher abgelegt. Beim Auftreten von Schlupf wird auf die Messung mittels Drehzahl und Umfangslänge des Wickels umgeschaltet, wobei die zuletzt gemessene Umfangslänge in dem genannten Zwischenspeicher zur Verfügung steht. Nun wird nach jeder Umdrehung des Wickels die Gesamtlänge um die gespeicherte Umfangslänge erhöht. Damit wird so lange fortgefahren, bis wieder kontinuierlicher Wickelbetrieb herrscht. Wenn während mehreren Umdrehungen Schlupf an der Messrolle herrscht, stellt sich das zusätzliche Problem, dass der Umfang des Wickels nicht konstant bleibt, sondern mit jeder Umdrehung des Wickels zunimmt. Zum Korrigieren dieses Fehlers wurde deshalb vorgeschlagen, den im kontinuierlichen Betrieb zuletzt ermittelten Wickelumfang mit jeder weiteren Umdrehung um einen konstanten Korrekturwert zu erhöhen. Dieser Korrekturwert soll mittels einer Tabelle anhand von Kenngrössen wie z.B. Fadenmaterial und Fadenabstand ermittelt werden. Die Eingabe derartiger Korrekturwerte ist in der Praxis ausserordentlich aufwendig. Ausserdem sind die Korrekturwerte ungenau und führen vor allem bei längerem Schlupfbetrieb zu Messfehlern.

Der Erfindung liegt die Aufgabe zu Grunde, die Gesamtlänge genauer als bisher üblich zu messen und dabei eine höhere Automatisierung des Betriebs zu erreichen.

Dies wird dadurch erreicht, dass die relative Wickelumfangs-Aenderung pro Umdrehung des Wickels beim Drehen des Wickels während des kontinuierlichen Betriebs ermittelt und gespeichert wird und dass der gespeicherte Wert während des Schlupfbetriebs verwendet wird, um die genannte Zunahme des Wickelumfangs pro Umdrehung zu bestimmen. Die Zunahme des Wickelumfangs pro Umdrehung wird also nicht mehr einer Tabelle entnommen. Damit werden die aufgrund der Ungenauigkeit der Tabelle entstehenden Messfehler vermieden und die manuelle Eingabe der Kenngrössen des Wickelguts ist nicht mehr nötig.

In der folgenden Erfindungsbeschreibung werden Abkürzungen für einzelne Grössen eingeführt und erläutert. Diese Abkürzungen werden auch in den Ausführungsbeispielen verwendet.

Die Länge des auf einen runden Wickel auflaufenden Guts kann dadurch bestimmt werden, dass die Drehwinkel-Änderung des Wickels mit einer Grösse multipliziert wird, die der Umfangslänge pro Winkeldrehung entspricht. Der Wert dieser Grösse ist von der gewählten Winkeleinheit abhängig. Wird zum Beispiel der Winkel in ganzen Umdrehungen angegeben, so muss der Winkel mit dem Umfang des Wickels multipliziert werden um die Wickellänge zu erhalten; wird hingegen der Winkel im Bogenmass angegeben ( eine Umdrehung = $2\pi$ ) so ist die Länge das Produkt von Winkel und Radius des Wickels. Allgemein formuliert entspricht der Multiplikand der Gesamtlängen-Änderung $\Delta l$ bezogen auf die Drehwinkel-Änderung $\Delta\varphi_w$ des Wickels. Er wird im Folgenden als relativer Wickelumfang $Uw_{rel}$ bezeichnet, wobei die verwendete Winkeleinheit offen bleibt. In der Praxis kann es auch sinnvoll sein, ein Inkrement eines Drehgebers ( z.B. 1/500 Umdrehung ) als Winkeleinheit zu definieren. Bei den folgenden Erklärungen wird jedoch Festlegung auf eine Winkeleinheit vorausgesetzt, so dass sich alle Angaben wie $\Delta\varphi_w$, $Uw_{rel}$, usw. auf ein und dieselbe Winkeleinheit beziehen. Dasselbe gilt sinngemäss für die Angabe der Wickeldrehzahl $\omega_w$ und der Drehzahl $\omega_m$ der Messrolle.

Die relative Wickelumfangslänge $Uw_{rel}$ wird mit zunehmender Dicke des Wickels immer grösser; $Uw_{rel}$ nimmt, konstante Fadenspannung vorausgesetzt, um einen konstanten Wert $\Delta Uw_{rel}$ pro Winkeldrehung $\Delta\varphi_w$ des Wickels zu. Dieser Wert $\Delta Uw_{rel}/\Delta\varphi_w$ wird im Folgenden als relative Wickelumfangs-Änderung bezeichnet und mit $dUw_{rel}/d\varphi_w$ abgekürzt. Dieser Wert soll die Art der physikalischen Grösse darstellen, ohne dass es sich dabei im streng mathematischen Sinne um eine "kontinuierliche" Ableitung (Differentialquotient) handelt.

Mit den Achsen der Messwalze und des Wickelbaums sind Drehgeber gekoppelt. Dabei kann es sich zum Beispiel um Inkrementalgeber handeln. Im kontinuierlichen Betrieb wird nun die Wickellänge anhand der Messrolle erfasst, gleichzeitig wird der relative Wickelumfang $Uw_{rel}$ und die relative Wickelumfangs-Änderung $dUw_{rel}/d\varphi_w$ ermittelt.

Der relative Wickelumfang $Uw_{rel}$ kann nach der Formel

$$Uw_{rel} = \frac{Um_{rel}\,\omega_m}{\omega_w} \tag{1}$$

bestimmt werden. $Um_{rel}$ ist dabei der relative Messrollen-Umfang. Die Definition von $Um_{rel}$ ist analog zu jener von $Uw_{rel}$; da der Umfang der Messrolle konstant ist, handelt es sich bei $Um_{rel}$ um eine Konstante. Wenn winkelmessende Drehgeber eingesetzt werden, kann $Uw_{rel}$ vorteilhaft nach der Formel

$$Uw_{rel} = \frac{Um_{rel}\,\Delta\varphi_m}{\Delta\varphi_w} \tag{2}$$

bestimmt werden. In diesem Fall wird die Winkeldrehung $\Delta\varphi_m$ der Messrolle zur gleichzeitigen Winkeldrehung $\Delta\varphi_w$ des Wickels ins Verhältnis gesetzt.

$dUw_{rel}/d\varphi_w$ wird aus der Änderung von $Uw_{rel}$ ermittelt. Dazu gibt es mehrere Möglichkeiten:

Zum einen kann zeitlich nacheinander zweimal die Grösse $Uw_{rel}$ gemessen werden; die Zunahme des relativen Wickelumfangs $\Delta Uw_{rel}$ zwischen diesen beiden Messungen wird dann auf die Winkeldrehung $\Delta\varphi_w$ bezogen, um welchen der Wickel zwischen den beiden Messungen verdreht wurde. Die $Uw_{rel}$-Messungen können dabei zeitlich periodisch gemacht werden, wobei auf Grund der variierenden Wickeldrehzahl $\omega_w$ die Winkeldrehung $\Delta\varphi_w$ zwischen zwei Messungen variiert. Die Schwierigkeit dieser Messmethode liegt in dem genauen Ermitteln der Winkeldrehung $\Delta\varphi$ des Wickels. Dies führt insbesondere zu Schwierigkeiten, wenn die Drehzahl $\omega_w$ des Wickels sehr klein ist und infolge dessen die Verdrehung des Wickels zwischen zwei Messungen klein ist. Bei vorübergehendem Stillstand der Maschine liefert diese Methode keine brauchbaren Resultate mehr.

Eine Alternative dazu besteht darin, die einzelnen Messungen zur Bestimmung von $Uw_{rel}$ nicht zeitlich periodisch durchzuführen, sondern jeweils nach einer bestimmten, konstanten Drehwinkeländerung $\Delta\varphi_w$ des Wickels erneut zu messen. Der zeitliche Abstand der Messungen ist jetzt von der Drehzahl des Wickels abhängig. Mit diesem Verfahren wird die Betriebssicherheit deutlich erhöht, die Genauigkeit ist nicht mehr von der Genauigkeit der $\Delta\varphi_w$-Messung abhängig und die Messungen werden bei Stillstand des Wickels automatisch ausgesetzt.

Denkbar ist auch, dass es sich bei den Drehgebern um drehzahlmessende Vorrichtungen wie zum Beispiel einen Tachogenerator handelt. In diesem Fall kann die relative Wickelumfangs-Änderung $dUw_{rel}/d\varphi_w$ wie folgt ermittelt werden:

$$(3) \qquad \frac{dUw_{rel}}{d\varphi_w} = \frac{dUw_{rel}}{dt} \frac{1}{\omega_w}$$

Die Ableitung nach der Zeit kann dabei entweder in einem analogen Differenzierglied oder durch Differenzbildung aus zwei aufeinanderfolgenden Drehzahlmessungen durchgeführt werden. Diese Anordnung hat den Vorteil dass sie auch eingesetzt werden kann, wenn nur ein Drehzahlmesser zur Verfügung steht und die Winkeldrehung nicht direkt erfasst werden kann. Die Genauigkeit hängt jedoch entscheidend von der Genauigkeit der Drehzahlmessung ab, ( was besonders bei kleinen Drehzahlen zu Schwierigkeiten führen kann ) und die Methode liefert insbesondere bei Stillstand des Wickels keine brauchbaren Messresultate.

Die ermittelten Werte des relativen Wickelumfangs $Uw_{rel}$ und der relativen Wickelumfangs-Änderung werden in einem Zwischenspeicher abgespeichert. Die Genauigkeit der ermittelten $Uw_{rel}$ und $dUw_{rel}/d\varphi_w$ kann durch geeignete statistische Auswertung mehrerer Messungen erhöht werden:

Die relative Wickelumfangs-Änderung $dUw_{rel}/d\varphi_w$ bleibt während des Wickelvorgangs annähernd konstant sofern der Wickelzug sich nicht ändert. Es ist daher möglich die Genauigkeit der Messung dadurch zu erhöhen, dass aus mehreren ermittelten Werten von $dUw_{rel}/d\varphi_w$ ein Mittelwert gebildet wird. Gute Resultate und eine einfache Auswertung werden bei Verwendung des arithmetischen Mittels erreicht.

Der relative Wickelumfang $Uw_{rel}$ nimmt mit zunehmender Wickelgrösse zu, proportional zum Drehwinkel $\varphi_w$ des Wickels. Auch hier kann mit geeigneten mathematischen Methoden ( lineare Extrapolation ) anhand der bekannten Messpunkte und des momentanen $\varphi_w$ auf den höchst wahrscheinlichen momentanen Wert von $Uw_{rel}$ geschlossen werden. Dieser 'höchst wahrscheinliche' Wert von $Uw_{rel}$ wird als Erwartungswert von $Uw_{rel}$ bezeichnet.

Um die einzelnen Begriffe im Folgenden klar trennen zu können, werden an dieser Stelle Indizes eingeführt. Der Index 0 bezeichnet den Wert von Grössen zu Beginn des Schlupfbetriebs:

$Uw_{rel\text{-}0}$ relativer Wickelumfang $Uw_{rel}$ zu Beginn des Schlupfbetriebs,
$l_0$ Gesamtlänge des bis zum Beginn des Schlupfbetriebs aufgewickelten Guts.

Der Index s bezeichnet den Wert von Grössen während (d.h. seit Beginn) des Schlupfbetriebs:

$l_s$ Länge des seit Beginn des Schlupfbetriebs aufgewickelten Guts,
$\varphi_{ws}$ Winkeldrehung des Wickels seit Beginn des Schlupfbetriebs.

Beim Auftreten von Schlupf wird die Messung der Gesamtlänge mit der alternativen Methode anhand der Signale des Wickeldrehgebers und der Grössen $Uw_{rel\text{-}0}$ und $dUw_{rel}/d\varphi_w$, welche im Zwischenspeicher zur Verfügung stehen, weitergeführt.

In Abhängigkeit von der eingesetzten Messanordnung gibt es verschiedene Möglichkeiten diese Messung vorteilhaft zu realisieren. Bei allen wird die Gesamtlänge 1 während des Schlupfbetriebs dadurch bestimmt, dass $l_s$ implizit oder explizit ermittelt und zu $l_0$ addiert wird. Unter der expliziten Ermittlung von $l_s$ ist jede Form zu verstehen, bei welcher der Wert von $l_s$ tatsächlich vorliegt und zu $l_0$ addiert werden kann. Vielfach ist es auch möglich, die Zunahme des $l_s$ um ein $\Delta l_s$ festzustellen und diese einzelnen $\Delta l_s$ sequentiell zu zu addieren; dabei liegt der Wert von $l_s$ nicht explizit vor und wir sprechen von einer impliziten Ermittlung von $l_s$.

Eine erste Variante basiert darauf, dass im Schlupfbetrieb die Grösse $Uw_{rel}$ ermittelt wird. Die Zunahme von $Uw_{rel}$ seit Beginn des Schlupfbetriebs wird dadurch bestimmt, dass die Winkeldrehung $\varphi_{ws}$ des Wickels seit Beginn des Schlupfbetriebs gemessen und mit $dUw_{rel}/d\varphi_w$ multipliziert wird. Durch Summieren

$$(4) \qquad Uw_{rel} = Uw_{rel\text{-}0} + \varphi_{ws} \frac{dUw_{rel}}{d\varphi_w}$$

dieser Zunahme und $Uw_{rel\text{-}0}$ wird $Uw_{rel}$ bestimmt. Die Zunahme $l_s$ der Wickellänge während des Schlupfbetriebs kann nun nach der Formel

$$(5) \qquad l_s(t) = \int_0^t Uw_{rel}\,\omega_w\,d\tau$$

bestimmt werden. Dazu ist ein Integrieren über die Zeit notwendig. Die Integration wird in der Praxis meist diskret in einem Rechner durchgeführt. Für dieses Verfahren ist vorteilhaft nur eine reine Drehzahlmessung nötig, schwierigkeiten können sich hingegen beim exakten Messen kleiner Drehzahlen ergeben.

Analog zum bereits Gesagten besteht auch in diesem Fall die Möglichkeit, auf das Integral über die Zeit zu verzichten und die Winkeldrehung des Wickels direkt zu erfassen:

$$(6) \qquad l_s(t) = \int_0^{\varphi_{ws}(t)} Uw_{rel}\,d\varphi_{ws}$$

Diese Berechnung wird am einfachsten durchgeführt, wenn jeweils nach einem konstanten $\Delta\varphi_w$ der neue $Uw_{rel}$ bestimmt wird und das neu dazugekommene $\Delta l_s$ nach der Formel $\Delta l_s = Uw_{rel}\Delta\varphi_w$ bestimmt wird. $l_s$ ergibt sich dann als Summe aller $\Delta l_s$. Um Fehler zu vermeiden darf nicht das neu ermittelte $Uw_{rel}$ eingesetzt werden, sondern es muss der Mittelwert des neuen und des zuletzt ermittelten $Uw_{rel}$ verwendet werden:

mit $\varphi_{ws} = n\Delta\varphi_w$

(n = Anzahl der Messungen seit Beginn des Schlupfbetriebs) ist das zur Berechnung des $\Delta l_s(n)$ zu verwendende $Uw_{rel}$ (n):

$$(7) \qquad Uw_{rel}(n) = Uw_{rel\text{-}0} + \frac{2n\text{-}1}{2}\Delta\varphi_w\frac{dUw_{rel}}{d\varphi_w}$$

$l_s$ berechnet sich dann wie bereits gesagt als:

$$(8) \qquad l_s = \sum_{k=1}^{n}\left(Uw_{rel\text{-}0}\Delta\varphi_w + \frac{2k-1}{2}\Delta\varphi_w^2\frac{dUw_{rel}}{d\varphi_w}\right)$$

Diese Summe kann mit Hilfe der Fuktion

$$(9) \qquad \sum_{k=1}^{n}\frac{2k-1}{2} = \frac{n^2}{2}$$

geschlossen berechnet werden und ergibt

$$(10) \qquad l_s = n\Delta\varphi_w Uw_{rel\text{-}0} + \frac{(n\Delta\varphi_w)^2}{2}\frac{dUw_{rel}}{d\varphi_w}$$

Dieses Resultat zeigt eine weitere Möglichkeit, zur Berechnung des Werts von $l_s$, ohne die einzelnen $\Delta l_s$ aufzusummieren.

Dazu kann die Formel 10 zu jedem gewünschten Zeitpunkt direkt ausgewertet werden. Besonders einfach lässt sich Formel 10 auswerten, wenn $\Delta\varphi_w = 1$ gewählt wird. Das kann durch die Wahl einer geeigneten Drehwinkel-Einheit erreicht werden. Zum Auswerten von Formel 10 muss, wie auch für andere bereits erwähnte Verfahren, $\varphi_{ws}$ bekannt sein.

$\varphi_{ws}$ lässt sich am einfachsten mit Drehgebern erfassen, die direkt eine Winkelmessung zulassen. Der neue Winkelwert wird dann entweder zeitlich periodisch oder immer nach einer konstanten Winkeldrehung $\Delta\varphi_w$ in einem Speicher oder Register abgelegt und kann dort abgefragt werden. Wenn die direkte Winkelmessung nicht möglich ist, so kann $\varphi_{ws}$ durch Integrieren von $\omega_w$ über die Zeit bestimmt werden.

Welche Methode zur Bestimmung von $l_s$ verwendet wird, hängt vor allem davon ab, ob eine direkte Messung von $\varphi_w$ möglich ist und wie leistungsstark der zur Auswertung verwendete Rechner ist. Wenn Rechenzeit gespart werden soll, so besteht die Möglichkeit, auf Multiplikationen während des eigentlichen Messvorgangs zu verzichten. Der Gesamtlängen-Wert wird dabei jeweils nach einem konstanten $\Delta\varphi_w$ um einen Längenzunahme-Wert $\Delta 1$ erhöht und dieser Längenzunahmewert wird nach jedem $\Delta\varphi_w$ um einen konstanten Korrekturwert erhöht. Dieser Korrekturwert sowie der Längenzunahme-Wert $\Delta 1(0)$ zu Beginn des Schlupfbetriebs werden bei Einsetzen des Schlupfbetriebs einmal bestimmt:

$$(11) \qquad Korrekturwert = \Delta\varphi_w^2 \frac{dUw_{rel}}{d\varphi_w}$$

$$(12) \qquad \Delta l(0) = Uw_{rel-0}\Delta\varphi_w - \frac{Korrekturwert}{2}$$

Auch hier ergibt sich eine besonders einfache Auswertung wenn $\Delta\varphi_w=1$ gewählt wird.

Die Erfindung ist im folgenden anhand von Ausführungsbeispielen näher erläutert. Es zeigen:

Figur 1a, b    ein Blockdiagramm von Anordnungen zum Ermitteln des relativen Wickelumfangs $Uw_{rel}$,

Figur 2a, b    ein Blockdiagramm von Anordnungen zum Ermitteln der relativen Wickelumfangs-Änderung $dUw_{rel}/d\varphi_w$,

Figur 3    ein Diagramm zur Darstellung eines Verfahrens zum Ermitteln des Erwartungswerts des momentanen relativen Wickelumfangs $Uw_{rel}$ anhand mehrerer Messwerte von $Uw_{rel}$,

Figur 4    ein Diagramm, aus dem die Ermittlung der Schlupf-Wickellänge $l_s$ ersichtlich ist,

Figur 5    ein Blockdiagramm einer Anordnung zum Ermitteln von 1, unter Verwendung der Drehzahl $\omega_w$ des Wickels,

Figur 6a,b,c    Blockdiagramme von Anordnungen zum Ermitteln von $l_s$ unter Verwendung konstanter Drehwinkel-Inkremente $\Delta\varphi_w$ des Wickels,

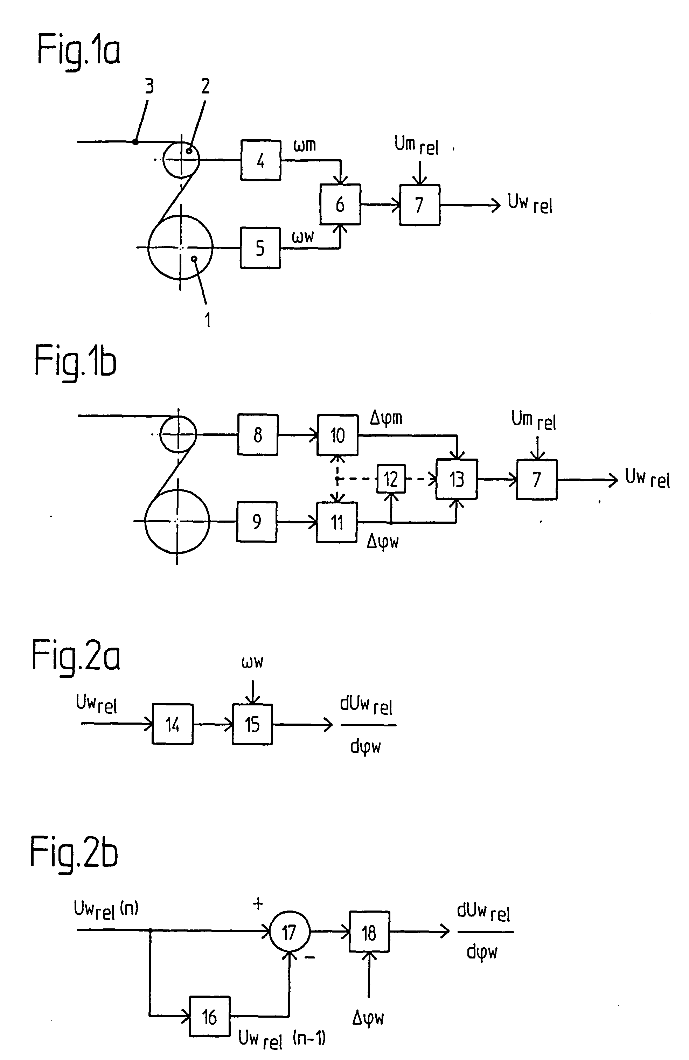

In Figur 1a ist schematisch ein Blockdiagramm zum Ermitteln des relativen Wickelumfangs $Uw_{rel}$ dargestellt. Das Wickelgut 3 läuft über die Messrolle 2 und wird auf dem Wickel 1 aufgewickelt. Die Messrolle 2 und der Wickel 1 sind je mit einem drehzahlmessenden Drehgeber 4,5 gekoppelt. Dabei kann es sich zum Beispiel um Tachogeneratoren handeln. Zur Bestimmung des relativen Wickelumfangs $Uw_{rel}$ wird nun die Tatsache ausgenützt, dass - schlupffreies Laufen der Messrolle vorausgesetzt - das Verhältnis der Drehzahlen $\omega_m$ und $\omega_w$ dem Verhältnis der Umfangslängen von Wickel und Messrolle entspricht.

Der Drehzahlwert $\omega_m$ der Messrolle 2 wird in einer Dividieranordnung 6 durch die Drehzahl $\omega_w$ des Wickels 1 dividiert und das Resultat dieser Division in der Multipliziereranordnung 7 mit dem relativen Messrollen-Umfang $Um_{rel}$ multipliziert; das Resultat ist der momentane relative Wickelumfang $Uw_{rel}$. Dieses Verfahren hat den Vorteil, dass drehzahlmessende Drehgeber wie Tachogeneratoren eingesetzt werden können; eine direkte Drehwinkelmessung ist nicht notwendig. Problematisch kann bei diesem Verfahren das Messen der Drehzahlen bei sehr langsam drehendem Wickel sein; insbesondere werden bei Stillstand des Wickels keine gültigen Resultate geliefert.

Die Alternative zu diesem Verfahren zeigt Figur 1b. Hier sind Wickel 1 und Messrolle 2 mit drehwinkelmessenden Drehgebern 8,9 verbunden. Dabei kann es sich zum Beispiel um Inkrementalgeber handeln. Das Vorgehen bei der Bestimmung von $Uw_{rel}$ ist ähnlich dem zu Figur 1a genannten, nur werden nicht die Drehzahlen durcheinander dividiert, sondern es wird die Winkeldrehung $\Delta\varphi_m$ des Wickels durch die gleichzeitige $\Delta\varphi_w$ des Wickels dividiert. Dazu werden die Winkeldrehungen von Messrolle und Wickel während einer Zeitspanne gemessen. Diese Zeitspanne könnte im Prinzip frei gewählt werden, sinnvoll ist es jedoch, jeweils nach einer bestimmten Verdrehung $\Delta\varphi_w$ des Wickels den momentanen $Uw_{rel}$ neu zu bestimmen. Hier stellt sich das Problem des Messens bei langsam drehendem Wickel nicht, insbesondere werden die Messungen bei Stillstand des Wickels automatisch ausgesetzt. Die in der Figur 1b gezeigten Inkrementalgeber 8,9 sind je mit einem Zähler 10,11 verbunden, welcher die einzelnen Winkelinkremente zusammenzählt. Zu Beginn werden die beiden Zähler 10,11 auf 0 gesetzt. Die Steuereinheit 12 überwacht laufend die Drehung des Wickels. Sobald sich der Wickel um $\Delta\varphi_w$ gedreht hat, löst die Steuereinheit 12 bei der Dividieranordnung 13 die Berechnung des relativen Wickelumfangs $Uw_{rel}$ aus und setzt anschliessend die Zähler 10,11 wieder auf 0 zurück.

Anhand der Figuren 2a und 2b werden Verfahren zum Ermitteln des $dUw_{rel}/d\varphi_w$ aus dem gemessenen $Uw_{rel}$ erklärt. Bei der Variante nach Figur 2a wird $Uw_{rel}$ in einer Differenziereinrichtung 14 nach der Zeit abgeleitet und das Resultat anschliessend in einer Dividiereinrichtung 15 durch die Drehzahl $\omega_w$ des Wickels dividiert. Diese Methode wird mit Vorteil dann angewendet, wenn die Eingangsgrösse $Uw_{rel}$ entweder kontinuierlich oder zeitlich periodisch (also durch ein Verfahren wie in Fig. 1a gezeigt) ermittelt wird, das erleichtert die Berechnung einer Ableitung nach der Zeit.

Figur 2b zeigt ein Verfahren zur Bestimmung von $dUw_{rel}/d\varphi_w$ das darauf basiert, dass die Änderung von $Uw_{rel}$ zwischen zwei Messungen auf die Änderung $\Delta\varphi_w$ des Wickel-Drehwinkels zwischen den beiden Messungen bezogen wird. Der $Uw_{rel}$-Wert der zuletzt durchgeführten Messung ist in einem Zwischenspeicher 16 gespeichert. Nach dem Drehen des Wickels um ein $\Delta\varphi_w$ wird wiederum $Uw_{rel}$ gemessen. Nun wird durch eine Subtrahiereinrichtung 17 die Differenz zwischen dem gerade gemessenen $Uw_{rel}$ und dem im Zwischenspeicher abgelegten $Uw_{rel}$ berechnet und anschliessend das neue $Uw_{rel}$ im Zwischenspeicher abgelegt. Die Differenz wird in einer Dividiereinrichtung 18 durch $\Delta\varphi_w$ dividiert und es ergibt sich $dUw_{rel}/d\varphi_w$. Diese Methode lässt sich besonders einfach anwenden, wenn $Uw_{rel}$, wie zu Fig. 1b ausgeführt, jeweils nach einer konstanten Wickeldrehung $\Delta\varphi_w$ neu bestimmt wird.

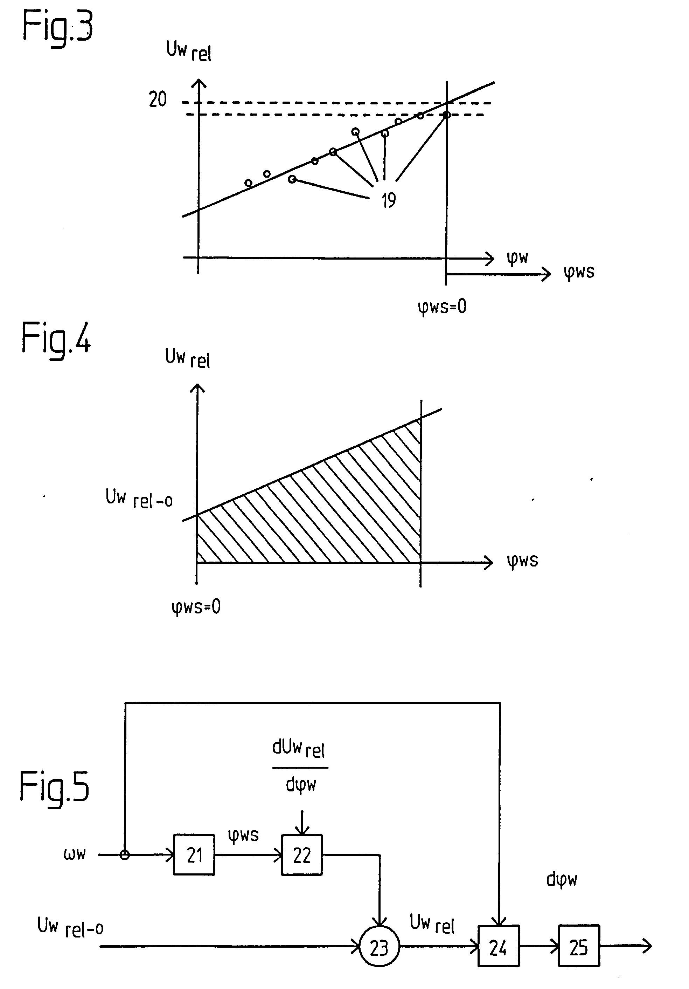

Anhand von Figur 3 wird ein Verfahren zur Bestimmung des Erwartungswerts 20 für den momentanen $Uw_{rel}$ erklärt. Der relative Wickelumfang $Uw_{rel}$ nimmt linear zum Drehwinkel $\varphi_w$ des Wickels zu. Der Wert von $Uw_{rel}$ wird während dem Drehen des Wickels immer wieder gemessen, die einzelnen Messwerte sind in Figur 3 als Kreise eingezeichnet. Das Ziel ist es, beim Auftreten von Schlupf den aktuellen relativen Wickelumfang $Uw_{rel}$ möglichst genau zu kennen. Wenn einfach der zuletzt gemessene Wert für $Uw_{rel}$ verwendet wird, so muss man mit einem gewissen Fehler rechnen, da ein kleiner Messfehler nicht zu vermeiden ist. Besser ist es, nicht den zuletzt gemessenen Wert zu verwenden, sondern aus möglichst vielen $Uw_{rel}$-Messwerten 19 zu berechnen wie gross der Erwartungswert für das momentane $Uw_{rel}$ ist. Die Anzahl von Messwerten, welche zur Bestimmung des Erwartungswerts von $Uw_{rel}$ verwendet werden, hängt vor allem davon ab, wieviel Rechenzeit für die Aufgabe zur Verfügung steht. Mathematische Methoden zur Durchführung einer solchen Berechnung sind allgemein bekannt und sollen hier nicht näher erörtert werden.

Da die zuletzt vor dem Feststellen von Schlupfbetrieb gemachten Messungen mit grosser Wahrscheinlichkeit bereits durch Schlupf an der Messrolle verfälscht sind, ist es im weiteren sinnvoll, die letzten Messresultate nicht für die statistische Bestimmung von $dUw_{rel}/d\varphi_w$ und $Uw_{rel}$ zu verwenden.

In Figur 4 ist die Zunahme von $Uw_{rel}$ als Funktion des Drehwinkels $\varphi_{ws}$ des Wickels während dem Schlupfbetrieb dargestellt. Zu Beginn des Schlupfbetriebs hat $Uw_{rel}$ den Wert $Uw_{rel-0}$. Die Gesamtlänge 1 wird dadurch berechnet, dass die Schlupf-Wikkellänge $l_s$ explizit oder implizit ermittelt und zu der bereits gemessenen Vorschlupf-Wickellänge $l_0$ dazugezählt wird. Die Schlupf-Wickellänge $l_s$ zu einem bestimmten Zeitpunkt t entspricht der schraffierten Fläche in Figur 4. Wird der Wert von $l_s$ bestimmt und zu $l_0$ dazugezählt, so wurde das $l_s$ explizit ermittelt; werden hingegen bei Zunahme von $l_s$ um $\Delta l_s$ die einzeln ermittelten $\Delta l_s$ zu $l_0$ dazugezählt, so wird $l_s$ implizit ermittelt ( $l_0$ wird um $l_s$ erhöht, der Wert von $l_s$ liegt jedoch nicht explizit vor ). Die folgenden Figuren zeigen verschiedene Möglichkeiten zur Bestimmung der Schlupf-Wickellänge $l_s$.

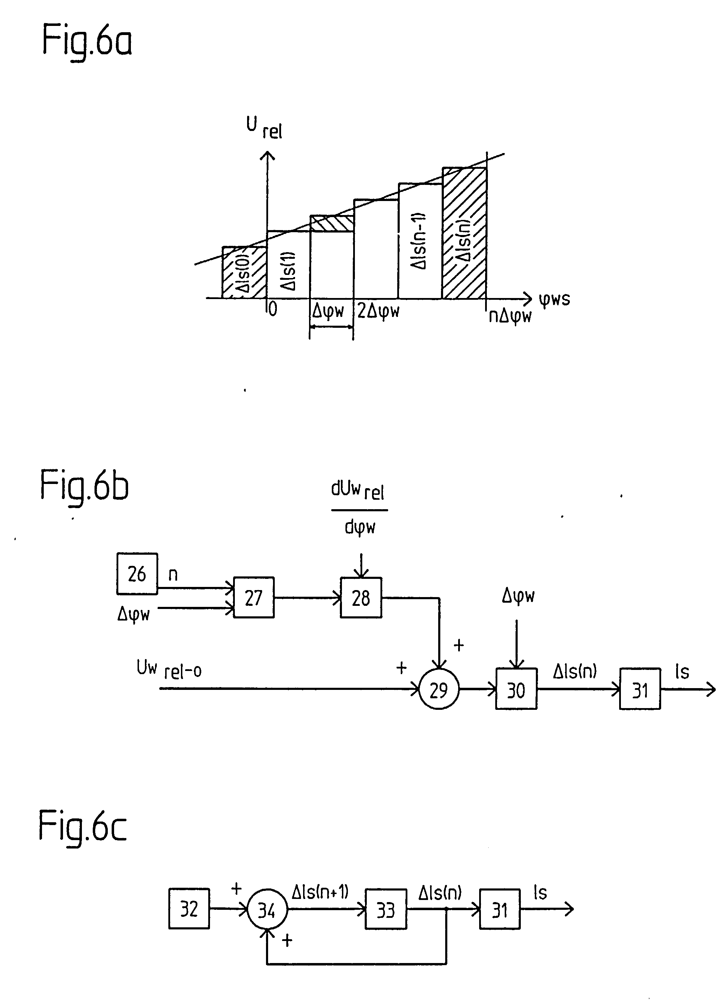

Figur 5 zeigt eine mögliche Anordnung zum Ermitteln von $l_s$.

In einer ersten Stufe wird aus $\omega_w$ und $Uw_{rel-0}$ der relative Wickelumfang $Uw_{rel}$ ermittelt. Dazu wird $\omega_w$ von der Integriereinrichtung 21 vom Beginn des Schlupfbetriebs an über die Zeit integriert und das Resultat in der Multiplizier-einrichtung 22 mit $dUw_{rel}/d\varphi_w$ multipliziert. Daraus ergibt sich der Wert für die Zunahme des relativen Wickelumfangs seit Beginn des Schlupfbetriebs. Zu diesem wird in der Summiereinrichtung 23 der relative Wickelumfang $Uw_{rel-0}$ zu Beginn des Schlupfbetriebs addiert und am Ausgang der Summiereinrichtung 23 steht $Uw_{rel}$ zur Verfügung. Zur Bestimmung von $l_s$ wird $Uw_{rel}$ in der Multipliziereinrichtung 24 mit $\omega_w$ multipliziert und das Produkt von der Integriereinrichtung 25 über die Zeit integriert. Dieses Verfahren erlaubt eine kontinuierliche Ermittlung von $l_s$ unter Verwendung eines rein drehzahlmessenden Drehgebers, was eine Kombination mit den in Figur 1a und 2a vorgestellten Verfahren zur Bestimmung von $Uw_{rel}$ und $dUw_{rel}/d\varphi_w$ nahelegt. Es ist aber auch möglich, die Berechnungen zeitlich periodisch zu wiederholen. Zur Bestimmung der Gesamtlänge wird das damit explizit bestimmte $l_s$ zu $l_0$ dazugezählt. Es wäre auch möglich, die Integriereinrichtung 25 zu Beginn des Schlupfbetriebs mit dem Anfangswert $l_0$ zu initialisieren, am Ausgang der Integriereinrichtung 25 steht dann direkt die Gesamtlänge zur Verfügung, was einer impliziten Bestimmung von $l_s$ entsprechen würde.

Die anhand der Figuren 6a, b und c erklärten Verfahren basieren darauf, dass die Bestimmung von $l_s$ jeweils nach einer konstanten Drehwinkel-Änderung $\Delta\varphi_w$ des Wickels wiederholt wird. Der in Figur 6a gezeigte Graph entspricht demjenigen von Figur 4. Wiederum geht es darum, die in Figur 4 schraffiert gezeichnete Fläche (die $l_s$ entspricht) zu bestimmen. Die Winkeldrehung ($\varphi_{ws}$ des Wickels seit Beginn des Schlupfbetriebs kann mit der Anzahl n der bereits gemachten Messungen als $\varphi_{ws} = n\Delta\varphi_w$ angegeben werden. Mit jeder weiteren Drehung des Wickels um $\Delta\varphi_w$ nimmt $l_s$ um $\Delta l_s(n)$ zu. Zur Bestimmung von $l_s(n)$ müssen also alle $\Delta l_s$ aufsummiert werden:

$$(13) \qquad l_s = \sum_{i=1}^{n} \Delta l_s(i)$$

Figur 6b zeigt eine Möglichkeit zum Bestimmen und Aufsummieren der $\Delta l_s$. Der Speicher 31 dient zum Aufsummieren der $\Delta l_s$, er wird zu Beginn des Schlupfbetriebs auf Null gesetzt. Der Zähler 26 wird nach jeder Winkeldrehung $\Delta\varphi_w$ des Wickels um eins erhöht und zeigt somit immer die Anzahl n der seit beginn des Schlupfbetriebs verstrichenen $\Delta\varphi_w$ an. In einem ersten Schritt wird die "Höhe" des neuen $\Delta l_s$-Felds (siehe Figur 6a) bestimmt, sie entspricht dem Wert von $Uw_{rel}$ bei $\varphi_{ws} = (n-1/2)\Delta\varphi_w$ Dazu wird $\varphi_{ws}$ zunächst in der Berechnungs-Einheit 27 anhand der Grössen n und $\Delta\varphi_w$ bestimmt und anschliessend in der Multipliziereinrichtung 28 mit $dUw_{rel}/d\varphi_w$ multipliziert. Zu diesem Resultat wird in der Summiereinrichtung 29 der Wert von $Uw_{rel-0}$ dazugezählt, das Resultat ist der gesuchte Wert von $Uw_{rel}$ (der Höhe des $\Delta l_s$-Felds). In der Multipliziereinrichtung 30 wird $Uw_{rel}$ mit $\Delta\varphi_w$ multipliziert, es resultiert das neu dazugekommene $\Delta l_s$. Dieses neue $\Delta l_s$ wird nun zu der im Speicher 31 abgelegten Schlupf-Wickellänge $l_s$ dazugezählt.

Figur 6c zeigt eine Vorrichtung zur Durchführung einer weiter vereinfachten Bestimmung von $\Delta l_s$. Wie aus Figur 6a ersichtlich ist, nimmt der Längenzunahme-Wert $\Delta l_s$ jedesmal um einen konstanten Korrekturwert 32 zu. Die Längenzunahme $\Delta l_s(n)$ (vergleiche Figur 6a) lässt sich also dadurch bestimmen, dass die Längenzunahme $\Delta l_s(n-1)$ der vorhergehenden $\Delta\varphi_w$ um den konstanten Korrekturwert 32 erhöht wird. Der Wert des zuletzt ermittelten $\Delta l_s$ ist in dem Zwischenspeicher 33 abgelegt. Nachdem sich der Wickel um ein weiteres $\Delta\varphi_w$ gedreht hat, wird das im Zwischenspeicher 33 abgelegte $\Delta l_s$ im Summierer 34 um den Korrekturwert 32 erhöht und die Summe wiederum im Zwischenspeicher 33 abgelegt. Dieses neue $\Delta l_s$ wird nun zu der im Speicher 31 abgelegten Schlupf-Wickellänge $l_s$ dazugezählt.

Bei Einsetzen des Schlupfbetriebs werden Korrekturwert 32 und Zwischenspeicher 33 mit ihren Anfangswerten initialisiert. Der Korrekturwert 34 wird nach der Formel

$$Korrekturwert = \Delta\varphi_w{}^2 \frac{dUw_{rel}}{d\varphi_w}$$

bestimmt und in Speicher 16 abgelegt. Der Längenzunahme-Wert $\Delta l_s(0)$ (siehe Figur 6a) wird nach der Formel

$$\Delta l_0 = Uw_{rel-0}\Delta\varphi_w - \frac{Korrekturwert}{2}$$

bestimmt und in Zwischenspeicher 33 abgelegt.

## Patentansprüche

1. Verfahren zum Messen der Gesamtlänge von auf einen Wickel auflaufendem, fadenförmigem Wickelgut, unter Verwendung einer mit dem Wickelgut in Kontakt befindlichen Messrolle, wobei die Messrolle und der Wickel je mit einem Drehgeber zum Erfassen der Drehbewegung gekoppelt sind und wobei während des kontinuierlichen Wickelbetriebs die Gesamtlänge des auflaufenden Guts mit Hilfe der Messrolle ermittelt wird und die relative Umfangslänge ($Uw_{rel}$) des Wickels anhand der Messrolle und der Drehbewegung des Wickels ermittelt und gespeichert wird, wobei beim Feststellen von Schlupf zwischen dem Wickelgut und der Messrolle die Messung der Gesamtlänge in der Weise fortgesetzt wird, dass pro Umdrehung des Wickels der Messwert für die Gesamtlänge um die Umfangslänge des Wickels erhöht wird, wobei der im kontinuierlichen Betrieb zuletzt bestimmte Wert für den relativen Wickelumfang ($Uw_{rel}$) mit jeder Umdrehung des Wickels um die Zunahme des relativen Wickelumfangs pro Umdrehung erhöht wird und wobei diese Messmethode so lange beibehalten wird, bis wieder kontinuierlicher Wickelbetrieb herrscht, worauf dann wieder die Messrolle die Messung der Wickellänge übernimmt,

   dadurch gekennzeichnet, dass die relative Wickelumfangs-Änderung pro Umdrehung des Wickels ($dUw_{rel}/d\varphi_w$) beim Drehen des Wickels während des kontinuierlichen Betriebs ermittelt und gespeichert wird und dass der gespeicherte Wert während des Schlupfbetriebs verwendet wird, um die genannte Zunahme des Wickelumfangs pro Umdrehung zu bestimmen.

2. Verfahren nach Anspruch 1, dadurch gekennzeichnet, dass der relative Wickelumfang ($Uw_{rel}$) nach einer der Formeln

$$Uw_{rel} = \frac{Um_{rel}\omega_m}{\omega_w} \qquad Uw_{rel} = \frac{Um_{rel}\Delta\varphi_m}{\Delta\varphi_w}$$

bestimmt wird. Dabei sind:

| | |
|---|---|
| $\omega_w$ | Drehzahl des Wickels |
| $\omega_m$ | Drehzahl der Messrolle |
| $\Delta\varphi_w$ | Drehwinkeländerung des Wickels |
| $\Delta\varphi_m$ | Drehwinkeländerung der Messwalze |
| $Um_{rel}$ | Relativer Messrollenumfang |

3. Verfahren nach Anspruch 1 oder 2, dadurch gekennzeichnet, dass die relative Wickelumfangs-Änderung ($dUw_{rel}/d\varphi_w$) dadurch bestimmt wird, dass der ermittelte relative Wickelumfang ($Uw_{rel}$) nach der Zeit abgeleitet und das Resultat der Ableitung durch die Drehzahl ($\omega_w$) des Wickels (1) dividiert wird.

4. Verfahren nach Anspruch 1 oder 2, dadurch gekennzeichnet, dass die relative Wickelumfangs-Änderung ($dUw_{rel}/d\varphi_w$) dadurch bestimmt wird, dass die Differenz von zwei nacheinander gemessenen Werten des relativen Wikkelumfangs ($Uw_{rel}$) gebildet und diese Differenz dividiert wird durch die Winkeldrehung ($\Delta\varphi_w$) des Wickels (1) zwischen den beiden Messungen.

5. Verfahren nach Anspruch 3 oder 4, dadurch gekennzeichnet, dass die Ermittlung des relativen Wickelumfangs ($Uw_{rel}$) und der relativen Wickelumfangs-Änderung ($dUw_{rel}/d\varphi_w$) während des kontinuierlichen Betriebs in zeitlich periodischen Abständen oder jeweils nach einer konstanten Wikkel-Drehwinkeländerung ($\Delta\varphi_w$) durchgeführt wird.

6. Verfahren nach einem der Ansprüche 1 bis 5, dadurch gekennzeichnet, dass die Genauigkeit der gemessenen relativen Wickelumfangs-Änderung ($dUw_{rel}/d\varphi_w$) durch Mittelwertbildung über mehrere Messwerte erhöht wird.

7. Verfahren nach einem der Ansprüche 1 bis 6, dadurch gekennzeichnet, dass bei Schlupfbetrieb die Winkeldrehung ($\varphi_{ws}$) des Wickels seit Beginn des Schlupfbetriebs gemessen wird und dass die Gesamtlänge dadurch ermittelt wird, dass unter Verwendung des relativen Wickelumfangs ($Uw_{rel}$) und der relativen Wickelumfangs-Änderung ($dUw_{rel}/d\varphi_w$) die Schlupf-Wickellänge ($l_s$) implizit oder explizit ermittelt und zu der Gesamtlänge ($l_0$) zu Beginn des Schlupfbetriebs addiert wird.

8. Verfahren nach Anspruch 7, dadurch gekennzeichnet, dass die Winkeldrehung ($\varphi_{ws}$) des Wickels seit Beginn des Schlupfbetriebs durch das Aufsummieren von gemessenen Teil-Winkeldrehungen ($\Delta\varphi_w$) gemessen wird.

9. Verfahren nach Anspruch 7 oder 8, dadurch gekennzeichnet, dass die Schlupf-Wickellänge ($l_s$) dadurch bestimmt wird, dass entweder das Produkt aus relativem Wickelumfang ($Uw_{rel}$) und Wickeldrehzahl ($\omega_w$) über die Zeit integriert wird, oder der relative Wickelumfang ($Uw_{rel}$) über den Wickel-Drehwinkel ($\varphi_{ws}$) integriert wird, wobei der relative Wickelumfang ($Uw_{rel}$) nach der Formel:

$$Uw_{rel} = \varphi_{ws}\frac{dUw_{rel}}{d\varphi_w} + Uw_{rel\text{-}0}$$

bestimmt wird. Dabei sind:

| | |
|---|---|
| $\varphi_{ws}$ | Winkeldrehung des Wickels während des Schlupfbetriebs |
| $dUw_{rel}/d\varphi_w$ | Relative Wickelumfangs-Änderung |
| $Uw_{rel\text{-}0}$ | Relativer Wickelumfang zu Beginn des Schlupfbetriebs. |

10. Verfahren nach Anspruch 7 oder 8, dadurch gekennzeichnet, dass die Schlupf-Wickellänge ($l_s$) nach der Formel

$$l_s(t) = U_{rel}\varphi_{ws}(t) + \frac{dU_{rel}}{d\varphi_w}\frac{\varphi_{ws}^2(t)}{2}$$

bestimmt wird. Dabei sind:

$\varphi_{ws}(t)$          Winkeldrehung des Wickels während des Schlupfbetriebs

$dUw_{rel}/d\varphi_w$     relative Wickelumfangs-Änderung

$Uw_{rel-0}$        relativer Wickelumfang zu Beginn des Schlupfbetriebs

**11.** Verfahren nach einem der Ansprüche 7 bis 10, dadurch gekennzeichnet, dass die Berechnung der Wickellänge während des Schlupfbetriebs in periodischen Zeitabständen durchgeführt wird.

**12.** Verfahren nach Anspruch 10, dadurch gekennzeichnet, dass die Gesamtlänge (1) nur einmal, am Ende des Schlupfbetriebs, berechnet wird.

**13.** Verfahren nach einem der Ansprüche 1 bis 6, dadurch gekennzeichnet, dass die Gesamtlänge (1) während des Schlupfbetriebs jeweils nach einer konstanten Winkeldrehung ($\Delta\varphi_w$) des Wickels neu bestimmt wird, indem der Wert für die Gesamtlänge (1) um einen Längenzunahme-Wert ($\Delta l$) erhöht wird und dieser Längenzunahmewert ($\Delta l$) jedesmal um einen konstanten Korrekturwert (32) erhöht wird.

**14.** Verfahren nach Anspruch 13, dadurch gekennzeichnet, dass der anfängliche Längenzunahme-Wert ($\Delta l(0)$) und der konstante Korrekturwert (32) zu Beginn des Schlupfbetriebs aus den Werten des relativen Wickelumfangs ($Uw_{rel}$), der relativen Wickelumfangs-Änderung ($dUw_{rel}/d\varphi_w$) sowie dem Wert der konstanten Winkeldrehung ($\Delta\varphi_w$) zwischen zwei Wickellängen-Bestimmungen ermittelt wird.

## Claims

**1.** Method for measuring the total length of wound material in the form of a yarn warp arriving on a winding reel, using a measuring roller in contact with the material being wound, wherein the measuring roller and the winding reel are each coupled with a rotation-measuring inducer for ascertaining rotational movement, and wherein the total length of the material being wound is ascertained with the aid of the measuring roller during continuous winding operation and the relative circumferential length ($Uw_{rel}$) of the wound material is ascertained on the basis of the measuring roller and the rotational movement of the winding reel, and is stored, wherein, on sensing the slippage between the material being wound and the measuring roller, the measurement of total length is continued in such a way that that, per rotation of the winding reel, the measured value for the total length is increased by the circumferential length of the wound material, wherein the most recent value for the relative circumference of the wound material ($Uw_{rel}$) to have been determined during continuous operation is increased with each rotation of the winding reel by the increase per rotation of the relative circumference of the wound material, and wherein this measurement method is maintained until constant winding operation again prevails, whereupon the measuring roller takes over measurement of the length of the wound material, characterized in that the relative change to the circumference of the wound material per rotation of the winding reel ($dUw_{rel}/d\varphi_w$) is ascertained during rotation of the winding reel during constant operation, and is stored, and that the stored value is used during slippage operation in order to determine the said increase of circumference of the wound material per rotation.

**2.** Method according to claim 1, characterized in that the relative circumference of the wound material ($Uw_{rel}$) is determined according to one of the equations:

$$Uw_{rel} = \frac{Um_{rel}\omega_m}{\omega_w} \qquad\qquad Uw_{rel} = \frac{Um_{rel}\Delta\varphi_m}{\Delta\varphi_w}$$

wherein:

$\omega_w$       Rotational speed of the winding reel

$\omega_m$       Rotational speed of the measuring roller

$\Delta\varphi_w$      Change to the rotational angle of the winding reel

$\Delta\varphi_m$      Change to the rotational angle of the measuring roller

$Um_{rel}$     Relative measuring roller circumference

**3.** Method according to claim 1 or 2, characterized in that the relative change to the circumference of the wound

material ($dUw_{rel}/d\varphi_w$) is determined in that the ascertained relative circumference of the wound material ($Uw_{rel}$) is differentiated according to time and the result of the differentiation is divided by the rotational speed ($\omega_w$) of the winding reel (1).

4. Method according to claim 1 or 2, characterized in that the relative change to the circumference of the wound material ($dUw_{rel}/d\varphi_w$) is determined in that the difference between two consecutively measured values for the relative circumference of the wound material ($Uw_{rel}$) is compounded and this difference is divided by the rotational angle ($\Delta\varphi_w$) of the winding reel (1) occurring between the two measurements.

5. Method according to one of the claims 3 or 4, characterized in that ascertainment of the relative circumference of the wound material ($Uw_{rel}$) and the relative change to the circumference of the wound material ($dUw_{rel}/d\varphi_w$) during constant operation is carried out at periodic intervals of time or in each case after a constant change of rotational angle of the winding reel ($\Delta\varphi_w$).

6. Method according to one of the claims 1 to 5, characterized in that the accuracy of the measured relative change to the circumference of the wound material ($dUw_{rel}/d\varphi_w$) is increased through compounding a mean value from a plurality of measured values.

7. Method according to one of the claims 1 to 6, characterized in that, during slippage operation, the rotational angle ($\varphi_{ws}$) of the winding reel since commencement of slippage operation is measured and that the total length is ascertained in that, using the relative circumference of the wound material ($Uw_{rel}$) and the relative change to the circumference of the wound material ($dUw_{rel}/d\varphi_w$), the slippage length of the wound material ($l_s$) is ascertained either implicitly or explicitly and is added to the total length ($1_0$) at commencement of slippage operation.

8. Method according to claim 7, characterized in that the rotational angle ($\varphi_{ws}$) of the winding reel since commencement of slippage operation is measured by summation of measured partial rotational angles of the winding reel ($\Delta\varphi_w$).

9. Method according to claim 7 or 8, characterized in that the slippage length of the wound material ($1_s$) is determined in that either the product of relative circumference of the wound material ($Uw_{rel}$) and rotational speed of the winding reel ($\omega_w$) is integrated over time, or the relative circumference of the wound material ($Uw_{rel}$) is integrated over the rotational angle of the winding reel ($\varphi_{ws}$), wherein the relative circumference of the wound material ($Uw_{rel}$) is determined by the equation:

$$Uw_{rel} = \varphi_{ws} \frac{dUw_{rel}}{d\varphi_w} + Uw_{rel\text{-}0}$$

where:

$\varphi_{ws}$       Rotational angle of the winding reel during slippage operation
$(dUw_{rel}/d\varphi_w)$       Relative change to the circumference of the wound material
$Uw_{rel\text{-}0}$       Relative circumference of the wound material at commencement of slippage operation

10. Method according to claims 7 or 8, characterized in that the slippage length of the wound material ($1_s$) is determined according to the equation:

$$l_s(t) = U_{rel}\varphi_{ws}(t) + \frac{dU_{rel}}{d\varphi_w} \frac{\varphi_{ws}^2(t)}{2}$$

where:

$\varphi_{ws}(t)$       Rotational angle of the winding reel during slippage operation
$(dUw_{rel}/d\varphi_w)$       Relative change to the circumference of the wound material
$Uw_{rel\text{-}0}$       Relative circumference of the wound material at commencement of slippage operation

11. Method according to one of the claims 7 to 10, characterized in that the calculation of the length of the wound material during slippage operation is carried out at periodic intervals of time.

12. Method according to claim 10, characterized in that the total length (l) is calculated once only, at the end of slippage operation.

13. Method according to one of the claims 1 to 6, characterized in that the total length (l) is re-determined during slippage operation in each case after a constant rotational angle ($\Delta\varphi_w$) of the winding reel, in that the value for the total length (l) is increased by a length-increase value ($\Delta l$) and that this length-increase value ($\Delta l$) is increased by a constant correction value (32).

14. Method according to claim 13, characterized in that the initial length-increase value ($\Delta l(0)$) and the constant correction value (32) at commencement of slippage operation is ascertained from the values of the relative circumference of the wound material ($Uw_{rel}$), the relative change to the circumference of the wound material ($dUw_{rel}/d\varphi_w$), as well as the value of the constant rotational angle of the winding reel($\Delta\varphi_w$) between two determinations of the length of the wound material.

## Revendications

1. Procédé pour mesurer la longueur totale d'un matériau à enrouler sous forme de fils qui arrive sur une bobine, en utilisant un rouleau de mesure en contact avec le matériau à enrouler, selon lequel le rouleau de mesure et la bobine sont accouplés chacun à un capteur de rotation destiné à détecter le mouvement de rotation, et selon lequel pendant l'enroulement continu, la longueur totale du matériau qui s'enroule est calculée à l'aide du rouleau de mesure et la longueur circonférentielle relative ($Uw_{rel}$) de la bobine est calculée à l'aide du rouleau de mesure et du mouvement de rotation de la bobine, et mise en mémoire, étant précisé que si on constate un patinage entre le matériau à enrouler et le rouleau de mesure, la mesure de la longueur totale est poursuivie de telle sorte qu'à chaque tour de la bobine, la valeur mesurée pour la longueur totale est augmentée de la longueur circonférentielle de la bobine, la valeur définie en dernier pour la circonférence relative de bobine ($Uw_{rel}$) lors du fonctionnement continu étant augmentée à chaque tour de la bobine selon l'augmentation de la circonférence relative de la bobine à chaque tour, et cette méthode de mesure étant maintenue jusqu'à ce qu'il y ait à nouveau un enroulement continu, après quoi le rouleau de mesure reprend la mesure de la longueur d'enroulement,

   caractérisé en ce que la variation relative de la circonférence de la bobine à chaque tour de la bobine ($dUw_{rel}/d\varphi_w$) est calculée et mise en mémoire lors de la rotation de la bobine pendant le fonctionnement continu, et en ce que la valeur mise en mémoire est utilisée pendant le patinage pour définir ladite augmentation de la circonférence de la bobine à chaque tour.

2. Procédé selon la revendication 1, caractérisé en ce que la circonférence relative de bobine ($Uw_{rel}$) est définie suivant l'une des formules suivantes :

$$Uw_{rel} = \frac{Um_{rel}\,\omega_m}{\omega_w} \qquad Uw_{rel} = \frac{Um_{rel}\,\Delta\varphi_m}{\Delta\varphi_w}$$

   dans lesquelles

   $\omega_w$ désigne la vitesse de rotation de la bobine,
   $\omega_m$ la vitesse de rotation du rouleau de mesure,
   $\Delta\varphi_w$ la variation d'angle de rotation de la bobine,
   $\Delta\varphi_m$ la variation d'angle de rotation du rouleau de mesure,
   $Um_{rel}$ la circonférence relative du rouleau de mesure.

3. Procédé selon la revendication 1 ou 2, caractérisé en ce que la variation relative ($dUw_{rel}/d\varphi_w$) de la circonférence de la bobine est calculée grâce au fait que la circonférence relative de bobine ($Uw_{rel}$) calculée est déduite en fonction du temps et le résultat de la déduction est divisé par la vitesse de rotation ($\omega_w$) de la bobine (1).

4. Procédé selon la revendication 1 ou 2, caractérisé en ce que la variation relative ($dUw_{rel}/d\varphi_w$) de la circonférence de la bobine est calculée grâce à la formation de la différence entre deux valeurs de la circonférence relative de bobine ($Uw_{rel}$) mesurées successivement, et à la division de cette différence par la rotation angulaire ($\Delta\varphi_w$) de la

bobine (1) entre les deux mesures.

5. Procédé selon la revendication 3 ou 4, caractérisé en ce que le calcul de la circonférence relative de bobine ($Uw_{rel}$) et de la variation relative ($dUw_{rel}/d\varphi_w$) de la circonférence de la bobine est effectué pendant le fonctionnement continu, périodiquement ou d'après une variation constante ($\Delta\varphi_w$) de l'angle de rotation de la bobine.

6. Procédé selon l'une des revendications 1 à 5, caractérisé en ce que la précision de la variation relative mesurée ($dUw_{rel}/d\varphi_w$) de la circonférence de la bobine est augmentée grâce à la formation d'une valeur moyenne sur plusieurs valeurs mesurées.

7. Procédé selon l'une des revendications 1 à 6, caractérisé en ce que, en cas de patinage, la rotation angulaire ($\varphi_{ws}$) de la bobine est mesurée depuis le début du patinage, et en ce que la longueur totale est déterminée grâce au fait que la longueur de bobine de patinage ($l_s$) est calculée implicitement ou explicitement à l'aide de la circonférence relative de bobine ($Uw_{rel}$) et de la variation relative ($dUw_{rel}/d\varphi_w$) de la circonférence de la bobine, et est ajoutée à la longueur totale ($l_0$) au début du patinage.

8. Procédé selon la revendication 7, caractérisé en ce que la rotation angulaire ($\varphi_{ws}$) de la bobine est mesurée depuis le début du patinage grâce à la somme de rotations angulaires partielles ($\Delta\varphi_w$) mesurées.

9. Procédé selon la revendication 7 ou 8, caractérisé en ce que la longueur de bobine de patinage ($l_s$) est définie soit grâce à l'intégration du produit de la circonférence relative de bobine ($Uw_{rel}$) et de la vitesse de rotation de bobine ($\omega_w$) sur le temps, soit grâce à l'intégration de la circonférence relative de bobine ($Uw_{rel}$) sur l'angle de rotation de bobine ($\varphi_{ws}$), la circonférence relative de bobine ($Uw_{rel}$) étant définie suivant la formule :

$$Uw_{rel} = \varphi_{ws}\frac{dUw_{rel}}{d\varphi_w} + Uw_{rel\text{-}0}$$

dans laquelle

$\varphi_{ws}$      désigne la rotation angulaire de la bobine pendant le patinage,
$dUw_{rel}/d\varphi_w$      la variation relative de la circonférence de la bobine et
$Uw_{rel\text{-}0}$      la circonférence relative de bobine au début du patinage.

10. Procédé selon la revendication 7 ou 8, caractérisé en ce que la longueur de bobine de patinage ($l_s$) est définie suivant la formule

$$l_s(t) = Uw_{rel}\varphi_{ws}(t) + \frac{dUw_{rel}}{d\varphi_w}\frac{\varphi_{ws}^{\,2}(t)}{2}$$

dans laquelle

$\varphi_{ws}(t)$      désigne la rotation angulaire de la bobine pendant le patinage,
$dUw_{rel}/d\varphi_w$      la variation de la circonférence relative de la bobine, et
$Uw_{rel\text{-}0}$      la circonférence relative de bobine au début du patinage.

11. Procédé selon l'une des revendications 7 à 10, caractérisé en ce que le calcul de la longueur de bobine est effectué périodiquement pendant le patinage.

12. Procédé selon la revendication 10, caractérisé en ce que la longueur totale (1) n'est calculée qu'une fois, à la fin du patinage.

13. Procédé selon l'une des revendications 1 à 6, caractérisé en ce que la longueur totale (1) est redéfinie pendant le patinage en fonction d'une rotation angulaire constante ($\Delta\varphi_w$) de la bobine, la valeur pour la longueur totale (1) étant augmentée d'une valeur d'augmentation de longueur ($\Delta l$) et cette valeur d'augmentation de longueur ($\Delta l$) étant augmentée à chaque fois d'une valeur de correction constante (32).

**14.** Procédé selon la revendication 13, caractérisé en ce que la valeur d'augmentation de longueur initiale ($\Delta l(0)$) et la valeur de correction constante (32) sont calculées au début du patinage, entre deux définitions de longueur de bobine, à partir des valeurs de la circonférence relative de bobine ($Uw_{rel}$), de la variation relative ($dUw_{rel}/d\varphi_w$) de la circonférence de la bobine et de la valeur de la rotation angulaire constante ($\Delta\varphi_w$).

**Fig.1a**

**Fig.1b**

**Fig.2a**

**Fig.2b**

Fig.3

Fig.4

Fig.5

## Fig.6a

## Fig.6b

## Fig.6c